# EUROPÄISCHE PATENTSCHRIFT

(11) **EP 0 927 659 B1**
(45) Veröffentlichungstag und Bekanntmachung des Hinweises auf die Patenterteilung: **26.04.2006**
(21) Anmeldenummer: 98122594.9
(22) Anmeldetag: 04.12.1998
(51) Int. Cl.: B60N 2/28

(54) **Rückhaltesystem für einen in einem Kraftfahrzeug mitgeführten Kindersitz**
Restraint system for a child seat carried in a motor vehicle
Système de retenue pour un siège d'enfant emporté dans un véhicule automobile

(30) Priorität: 02.01.1998 DE 19800072
(43) Veröffentlichungstag der Anmeldung: 07.07.1999
(73) Patentinhaber: Volkswagen Aktiengesellschaft, 38436 Wolfsburg (DE)
(72) Erfinder: Degener, Michael, 38108 Braunschweig (DE); Möker, Carsten, Dipl.-Ing., 38471 Rühen (DE)
(74) Vertreter: Schneider, Henry

(56) Entgegenhaltungen:
- EP-A- 0 689 955
- WO-A-94/12806
- DE-U- 29 612 441
- US-A- 5 462 333
- US-A- 5 468 044
- US-A- 5 468 045
- US-A- 5 664 830
- US-A- 5 685 603

## Beschreibung

Die Erfindung betrifft ein Rückhaltesystem, gemäß dem Oberbegriff des Anspruchs 1 bzw. 2, für einen in einem Kraftfahrzeug mitgeführten, auf Die Erfindung betrifft ein Rückhaltesyste für einen in einem Kraftfahrzeug mitgeführten, auf einem Sitz des Kraftfahrzeugs abgestellten Kindersitz, bei dem der Kindersitz mit mindestens einer integrierten Rasteinrichtung versehen ist, die beim Befestigen des abgestellten Kindersitzes mit mindestens einer am Sitz oder in dessen Nähe an einem Karosserieteil des Kraftfahrzeugs angebrachten sitz- oder fahrzeugfesten Befestigungseinrichtung in Eingriff tritt. Die Erfindung betrifft weiter ein Kraftfahrzeug, gemäß dem Oberbegriff des Anspruchs 15 bzw. 16, mit mindestens einem Sitz und mindestens einer am Sitz oder in dessen Nähe an einem Karosserieteil des Fahrzeugs angebrachten sitz- oder fahrzeugfesten Befestigungseinrichtung für einen auf dem Sitz abgestellten Kindersitz. Darüber hinaus betrifft die Erfindung einen Kindersitz für Kraftfahrzeuge gemäß dem Oberbegriff des Anspruchs 22.

Die meisten herkömmlichen Rückhaltesysteme für Kindersitze weisen einen Sicherheitsgurt auf, mit dessen Hilfe der Kindersitz auf einem Sitz des Fahrzeugs, gewöhnlich auf einem Rücksitz, befestigt wird. Diese Art der Befestigung hat jedoch den Nachteil, daß sich der Kindersitz quer zur Fahrtrichtung etwas gegenüber dem Sitz verschieben kann, was insbesondere bei einem Seitenaufprall auf das Kraftfahrzeug sicherheitstechnisch von Nachteil ist. Außerdem ist die Handhabung dieser Systeme relativ aufwendig.

Um dieses Problem zu beseitigen, wird unter der Bezeichnung ISOFIX-Kindersitzsystem bereits ein Rückhaltesystem der eingangs genannten Art für einen in einem Kraftfahrzeug mitgeführten Kindersitz angeboten, bei dem der Kindersitz zwei ausfahrbare Ausleger oder Rastarme aufweist, die sich nach dem Abstellen des Kindersitzes auf dem Sitz in den Spalt zwischen dessen Rückenlehne und dessen Sitzteil schieben lassen, bis zwei an den freien Enden der Ausleger oder Rastarme angeordnete, als Hakenfallen ausgebildete Rasteinrichtungen hörbar und fühlbar mit einem im Spalt angeordneten Rastbolzen in Rasteingriff treten. Gegenüber den vorstehend beschriebenen Systemen mit Anbindung über den Sicherheitsgurt ergibt sich vorteilhaft eine frühzeitige Kopplung an die Verzögerung des Gesamtfahrzeuges. Die Insassenbelastung für die im Kindersitz untergebrachten Insassen wird dadurch verringert.

Weiter ist aus der EP 0 603 733 B1 ein Kraftfahrzeug der eingangs genannten Art bekannt, bei dem an beiden Seiten eines Fahrzeugsitzes Befestigungseinrichtungen in Form von Gurtschlössern vorgesehen sind, in welche sich jeweils eines von zwei Paaren nach vorne bzw. nach hinten über den Kindersitz überstehender Rasten einführen lässt, um den Kindersitz auf dem Sitz des Fahrzeugs zu befestigen.

Aus der EP 0 694 437 A1 ist eine weitere Rückhaltevorrichtung der eingangs genannten Art bekannt, bei der ein Adapterrahmen des Kindersitzes vier Schnellkupplungen aufweist, die sich mit bolzen- bzw. bügelförmigen Befestigungseinrichtungen eines Fahrzeugsitzes in Eingriff bringen lassen, welche in einem Spalt zwischen dem Sitzteil und der Rückenlehne bzw. am vorderen unteren Rand des Sitzteils am Sitzgestell befestigt sind.

Bei Ladegutversuchen entsprechend der DIN 75410-2A, bei denen das von ungesichertem Ladegut mit einem Gewicht von 2 x 18 kg im Gepäckraum eines Personenkraftwagens ausgehende Risiko im Falle einer hohen negativen Beschleunigung von mindestens 20 g über 30 Millisekunden, entsprechend einer Aufprallgeschwindigkeit von etwa 40 km/h, untersucht wurde, hat man festgestellt, dass sich bei den meisten getesteten Personenkraftwagen die Rückenlehnen der Rücksitze oder Rücksitzbänke beim Aufprall von schwerem Ladegut auf ihre Rückseite verformen und nach vome bewegen, selbst wenn es, wie in den meisten Fällen, nicht zu einem Ausreißen der Lehnenverankerung kommt.

Außerdem ist eine Kindersitzbefestigungsvorrichtung zur Befestigung eines einteiligen Kindersitzes in einem Hauptbeifahrersitz in einer Beifahrerzelle eines Kraftfahrzeuges aus der EP 0 689 955 A1 bekannt, wobei die besagte Befestigungseinrichtung ein energieabsorbierendes Scheibenglied mit einem ersten und einem zweiten Lappen und einer ersten und einer zweiten Kante, die sich dazwischen erstrecken und einem mittleren Abschnitt, der im Wesentlichen auf halbem Weg zwischen dem besagten ersten und dem besagten zweiten Lappen liegt, aufweist. Dabei sind der erste und der zweite Lappen so ausgelegt, dass sie am besagten Hauptbeifahrersitz befestigt werden können, wobei der mittlere Abschnitt, um an dem Kindersitz befestigt zu werden, einen Spannungserhöher aufweist, der am energieabsorbierenden Scheibenglied angebracht ist, wobei der Spannungserhöher fungiert, um steuerbare Energie zu absorbieren, indem das energieabsorbierende Scheibenglied induziert wird, um am Spannungserhöher abzuscheren oder zu zerreißen, nachdem eine Kraft auf den mittleren Abschnitt einwirkt, die einen vorbestimmten Grenzwert übersteigt.

Schließlich ist aus der US-A-5 685 603 eine Kindersitzbefestigungsvorrichtung zur Befestigung eines einteiligen Kindersitzes in einem Beifahrersitz bekannt , wobei die besagte Befestigungreinrichtung energieabsorbierende Elemente aufweist , die am Beifahrersitz angeordnet sind. Diese Haltevorrichtung weist eine Unterstützungskonstruktion für den Kindersitz auf einem Kraftfahrzeugsitz auf, die während einer Kollision beim Überschreiten einer Höchstgrenze einer vorgebbaren Schwelle relativ zum Kraftfahrzeugsitz beweglich ist. Die Unterstützungskonstruktion weist ein Absorberelement zum Abbau der kinetischen Energie während der relativen Bewegung des Kindersitzes gegenüber dem Kraftfahrzeugsitz auf. Das in verschiedenen Ausführungen angeordnete Absorberelement ist dabei zwischen Kindersitz und der den Kindersitz haltenden Unterstützungskonstruktion angeordnet.

Aus der EP 0 774 376 A2 der Anmelderin ist es bereits an sich bekannt, ein Ausreißen von Schwenklagern oder Schlössern einer Rückenlehne einer Kraftfahrzeugrücksitzbank durch ein in den Schlössern bzw. Schwenklagern enthaltenes Deformationselement zu verhindern, das sich bei Überschreiten einer vorgegebenen Kraft auf die Rückenlehne unter Energieaufnahme gezielt plastisch verformt und dadurch einen gesteuerten Abbau der kinetischen Energie der auf die Rückenlehne aufprallenden Transportgegenstände ermöglicht.

Ausgehend hiervon liegt der Erfindung die Aufgabe zugrunde, ein Rückhaltesystem, ein Kraftfahrzeug und einen Kindersitz der eingangs genannten Art dahingehend zu verbessern, dass ein gewaltsames Öffnen oder eine Zerstörung der Rast- oder Befestigungseinrichtung verhindert wird.

Diese Aufgabe wird erfindungsgemäß durch die Merkmale der e.g. unabhängigen Ansprüche 1, 2, 15, 16 und 22. Weitere Merkmale der Erfindung sind in den abhängigen Ansprüchen angegeben.

Der Erfindung liegt der Gedanke zugrunde, kindersitz- oder fahrzeugseitig von der Rast- bzw. Befestigungseinrichtung ein schwächeres Glied anzuordnen, das bei einer Krafteinwirkung auf die Kindersitzrückenlehne infolge seiner plastischen Verformbarkeit eine begrenzte Bewegung des Kindersitzes nach vome gestattet, d.h. in der gleichen Richtung, in der sich die angrenzende Rückenlehne des Fahrzeugsitzes beim Aufprall von Transportgut verformt oder bewegt. Dadurch kann die von der Rückenlehne des Fahrzeugsitzes auf den Kindersitz ausgeübte Spitzenbelastung unterhalb eines vorgegebenen Grenzwerts gehalten werden. Dieser Grenzwert läßt sich durch entsprechende Ausbildung, Materialeigenschaften und Abmessungen des Deformationselements so einstellen, daß er ausreichend weit unter derjenigen Kraft liegt, die ein gewaltsames Öffnen oder eine Zerstörung der Befestigungs- und/oder Rasteinrichtung zur Folge haben kann.

Anders als bei dem aus der EP 0 774 376 A2 bekannten Deformationselement kommt es nicht auf einen Abbau von kinetischer Energie durch die plastische Verformung des Deformationselements an. Entscheidend ist hier die bei Überschreitung des Grenzwertes durch die Verformung bewirkte Relativbewegung des Kindersitzes gegenüber dem Sitz, die eine Reduzierung der von der Rückenlehne des Fahrzeugsitzes auf die Rückenlehne des Kindersitzes ausgeübten Spitzenkräfte gestattet.

Die plastische Verformung des Deformationselements setzt bei Überschreiten der vorgegebenen Kraft ein, die sich bei einem Frontalaufprall aus der von der Sitzrückenlehne auf die Rückenlehne des Kindersitzes ausgeübten Kraft und den Trägheitskräften des Kindersitzes und eines darin sitzenden Kindes zusammensetzt. Dies bedeutet, daß sich das Deformationselement einerseits bereits bei verhältnismäßig geringen Aufprallgeschwindigkeiten verformen kann, wenn schweres ungesichertes Ladegut gegen die Rückenlehne des Fahrzeugsitzes prallt und diese verformt oder nach vorne drückt. Andererseits können die Trägheitskräfte des Kindersitzes und des darin sitzenden Kindes bei sehr hohen Aufprallgeschwindigkeiten auch ohne einen Aufprall von Ladegut auf die Rückenlehne des Fahrzeugsitzes zu einer plastischen Verformung des Deformationselements führen. Dadurch können auch in dieser Situation infolge der Nachgiebigkeit des Deformationselements die in die Rast- und/oder Befestigungseinrichtung eingeleiteten Spitzenkräfte verringert und damit ein gewaltsames Öffnen oder eine Zerstörung verhindert werden.

Jeder Rasteinrichtung des Kindersitzes ist zweckmäßig eine sitz- oder fahrzeugfeste Befestigungseinrichtung zugeordnet, wobei jeweils die eine der beiden zusammenwirkenden Einrichtungen als passives Glied ausgebildet ist und ein starres Rastelement, wie beispielsweise einen Rastbolzen, einen Rastbügel oder eine Schloßzunge eines Gurtschlosses umfaßt, und die andere Einrichtung als aktives Glied mit einem beweglichen Rastelement, beispielsweise als Hakenfalle, als Schnellkupplung oder als Schloßteil eines Gurtschlosses ausgebildet ist. Das heißt, das passive Glied kann sowohl die kindersitzseitige Rasteinrichtung sein, wie beispielsweise in der EP 0 603 733 B1 offenbart, oder die sitz- oder fahrzeugseitigen Befestigungseinrichtung, wie beispielsweise beim ISOFIX-System. Das gleiche gilt umgekehrt auch für das aktive Glied.
Eine bevorzugte Ausgestaltung der Erfindung sieht vor, daß das Deformationselement einen Teil des passiven Gliedes und vorzugsweise des starren Rastelements bildet, wobei es entweder am Karosserieteil bzw. am Fahrzeugsitz oder am Kindersitz angeordnet sein kann, je nachdem wo sich das passive Glied befindet. Alternativ ist es jedoch auch möglich, das Deformationselement auf der Seite des aktiven Gliedes anzuordnen, wobei es in diesem Fall vorteilhafterweise zwischen diesem und der damit bestückten Komponente des Rückhaltesystems, d.h. also entweder dem Kindersitz oder dem Fahrzeugsitz bzw. dem Karosserieteil, angebracht ist.

Dort, wo das Deformationselement einen Teil eines starren Rastelements bildet, besteht dieses vorzugsweise aus einem einstückig ausgebildeten Bügel mit zwei in Fahrtrichtung verlaufenden Deformationselementen in Form von wellen- oder zickzackförmig gebogenen Schenkeln, die durch ein im wesentlichen quer zur Fahrtrichtung verlaufendes, zum Verrasten eines beweglichen Rastelements der Befestigungs- oder Rasteinrichtung dienendes Joch verbunden sind. Diese Ausgestaltung ermöglicht eine besonders preiswerte Herstellung aus gebogenem Stahldraht sowie eine Erfüllung der Deformations- und Rastfunktion auf engstem Raum, beispielsweise in einem Spalt zwischen einer Rückenlehne und einem Sitzteil einer Rücksitzbank des Fahrzeugs. Die plastische Verformung der von den Schenkeln gebildeten Deformationselemente erfolgt in diesem Fall dadurch, daß sich die Schenkel unter Begradigung in Fahrtrichtung strecken und ggf. zusätzlich in Fahrtrichtung biegen, wenn sie zusätzlich aus der Ebene der wellen- oder zickzackförmigen Biegungen heraus abgebogen oder abgeknickt sind.

Dort, wo das Deformationselement auf der Seite des aktiven Gliedes angeordnet ist, kann es ebenfalls aus einem Bügel mit zickzack- oder wellenförmigen Schenkeln oder aus einem einzelnen zickzack- oder wellenförmig gebogenen Stahldraht bestehen, der zum Beispiel als Träger für eine als Schloßteil eines Gurtschlosses ausgebildete Befestigungseinrichtung dient und vorzugsweise mit einer Verkleidung versehen ist.

Alternativ dazu sieht eine andere bevorzugte Ausgestaltung der Erfindung vor, daß das Deformationselement mindestens einen Schlitz aufweist, in den ein Aufweitkörper eingreift, dessen Abmessungen in Richtung einer Breite des Schlitzes größer als die letztere sind, und daß sich der Aufweitkörper bei Überschreiten der vorgegebenen Kraft unter plastischer Aufweitung des Schlitzes innerhalb desselben verschiebt. Diese Ausgestaltung ist besonders vorteilhaft, wenn das Deformationselement beim ISOFIX-System auf der Seite des Kindersitzes angeordnet werden soll, weil dort der Schlitz und der Aufweitkörper nicht sichtbar im Unterteil des Kindersitzes angeordnet werden können, beispielsweise zwischen einem starren Gestell und einem Rohr, in dem ein nach hinten überstehender oder nach hinten ausfahrbarer, am freien Ende mit der Rasteinrichtung versehenen Ausleger verschiebbar ist. Ausführlichere Angaben über die Ausbildung eines derartigen Deformationselements finden sich in der bereits genannten EP 0 774 376 A2, deren Offenbarung im Hinblick darauf hier aufgenommen werden soll.

Im folgenden wird die Erfindung anhand eines in der Zeichnung dargestellten bevorzugten Ausführungsbeispiels näher erläutert. Es zeigen:
Fig. 1: eine perspektivische Ansicht einer Rücksitzbank eines Personenkraftwagens und eines Kindersitzes, die mit einem erfindungsgemäßen Rückhaltesystem ausgestattet sind, und zwar vor dem Abstellen und Befestigen des Kindersitzes auf der Rücksitzbank bei Betrachtung schräg von vome;
Fig. 2: eine perspektivische Ansicht eines Teils der Rückseite des Kindersitzes, umfassend zwei aktive Rasteinrichtungen mit einem beweglichen Rastelement, sowie von zwei passiven fahrzeugfesten Befestigungseinrichtungen mit einem starren Rastelement;
Fig. 3: eine vergrößerte Draufsicht von oben auf eines der passiven Rastelemente und seine Halterung;
Fig. 4: eine Schnittansicht des Rastelements und der Halterung entlang der Linie IV-IV der Fig. 3 nach der Montage auf einer Bodenplatte eines hinter der Rücksitzbank angeordneten Gepäckraums.

Das in der Zeichnung dargestellte Rückhaltesystem dient zur starren Befestigung eines Kindersitzes 2 auf einer Rücksitzbank 4 eines Personenkraftwagens.

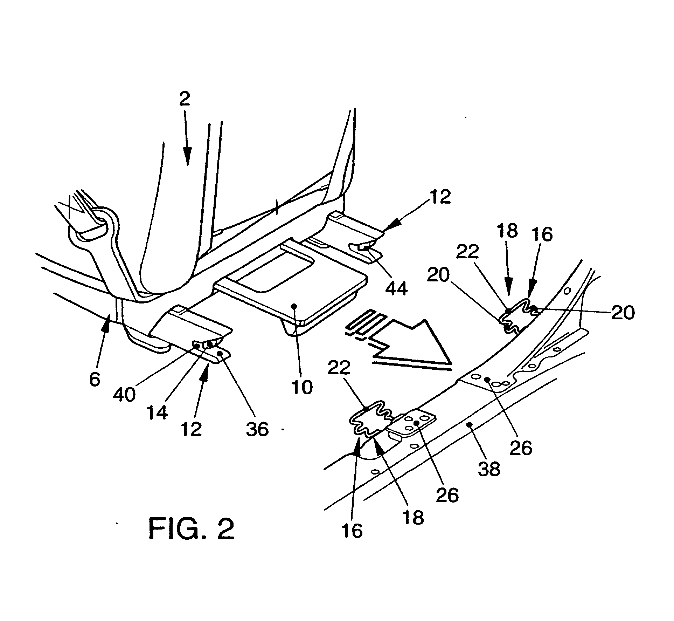

Der Kindersitz 2 weist dazu zwei aktive Rasteinrichtungen in Form von Hakenfallen 12 auf, die an den freien hinteren Enden von zwei in einem starren Unterteil 6 des Kindersitzes 2 verschiebbar gelagerten Rastarmen 8 angeordnet sind. Die Rastarme 8 sind mit Hilfe eines ausziehbaren Bedienungsgriffs 10 (Fig. 2) nach hinten zu aus dem Unterteil 6 ausfahrbar. Der Bedienungsgriff 10 ist an der Rückseite des Unterteils 6 zwischen den Rastarmen 8 angeordnet und starr mit diesen verbunden. Jede der Hakenfallen 12 ist mit einem beweglichen Rastelement in Form einer verschwenkbaren Rastnase 14 versehen. Die Hakenfallen 12 lassen sich jeweils mit einer passiven fahrzeugfesten Befestigungseinrichtung 18 in Rasteingriff bringen, die ein starres Rastelement in Form eines Rastbügels 16 aufweist. Die Rastbügel 16 stehen in Fahrtrichtung über ein nach vome und unten abgeknicktes Bodenblech 38 eines hinter der Rücksitzbank 4 angeordneten Gepäckraums über, wobei sie quer zur Fahrtrichtung in einem dem Abstand der Rastarme 8 entsprechenden Abstand angeordnet sind.

Die aus Runddraht und vorzugsweise aus einem biegsamen Stahldraht hergestellten Rastbügel 16 weisen jeweils zwei in einer horizontalen Ebene wellenförmig gebogene Schenkel 20 auf, die an ihrem in Fahrtrichtung weisenden vorderen Ende durch ein im wesentlichen quer zur Fahrtrichtung verlaufendes, in der Ebene der Schenkel 20 angeordnetes gerades Joch 22 verbunden sind, mit dem sich die Rastnase 14 der Hakenfalle 12 auf dem zugehörigen Rastarm 8 in Rasteingriff bringen läßt.

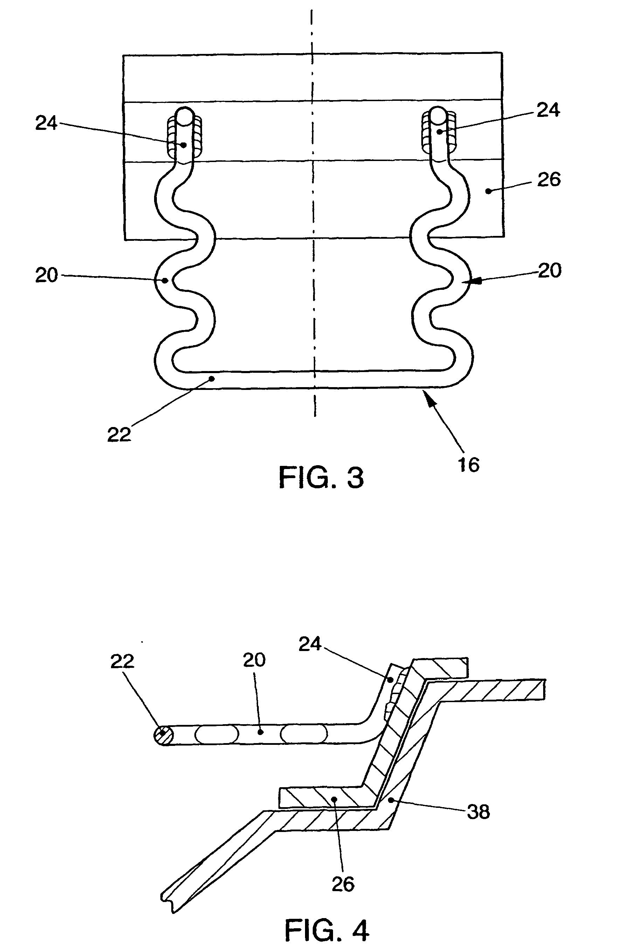

Bei dem in Fig. 3 dargestellten Ausführungsbeispiel weisen die Schenkel 20 jeweils sechs in Draufsicht halbkreisförmige konvexe Biegungen auf, die von einer zur Fahrtrichtung parallelen geraden Verbindungslinie zwischen dem vorderen und hinteren Ende des Schenkels aus abwechselnd nach entgegengesetzten Seiten weisen. Jedoch können sowohl die Anzahl als auch die Form, wie beispielsweise der Krümmungsradius der Biegungen sowie die Anzahl, die Form und die Länge von ggf. zwischen zwei benachbarten Biegungen angeordneten geradlinigen Teilstücken je nach der Biegefestigkeit des Bügelmaterials und einer vorgegebenen maximalen Verformung des gestreckten Bügels nach Bedarf verändert bzw. an den jeweiligen Einsatzfall angepaßt werden.

Die vom Joch 22 abgewandten freien Enden 24 der Schenkel 20 sind mit einer Halterung in Form einer an das Profil des Bodenblechs 38 angepaßten Trägerplatte 26 verschweißt, die vor der Montage des Bodenblechs 38 auf dessen Oberseite festgeschweißt wird. Die Bügel 16 bzw. die Trägerplatte 26 werden dabei so auf dem Bodenblech 38 positioniert, daß das Joch 22 nach dem Einbau der Rücksitzbank 4 in einem Spalt 28 zwischen einer Rückenlehne 30 und einem Sitzteil 32 der Rücksitzbank 4 angeordnet ist.
Die beiden Schenkel 20 der Bügel 16 bilden Deformationselemente, die sich bei Überschreiten der Fließgrenze des metallischen Bügelmaterials infolge einer von der Rastnase 14 in Fahrtrichtung auf das Joch 22 ausgeübten Kraft plastisch verformen, wobei sie sich im Bereich ihres wellenförmigen Abschnitts in Fahrtrichtung strecken, so daß sich das Joch 22 um zwei bis drei Zentimeter nach vome in Fahrtrichtung bewegt. Die Schenkel 20 sind zu einer in Fahrtrichtung verlaufenden vertikalen Mittelebene 34 des Bügels 16 (Fig. 3) symmetrisch, so daß die Vorwärtsbewegung des Jochs 22 auf beiden Seiten gleichförmig erfolgt. Die beiden Bügel 16 weisen jeweils dieselben Abmessungen auf und bestehen aus demselben Material, so daß ihre Verformung im wesentlichen dieselbe ist, da eine von der Rückenlehne 30 auf den Kindersitz 2 ausgeübte Kraft jeweils ungefähr zur Hälfte durch die Rastarme 8 auf die beiden Bügel 16 übertragen wird.

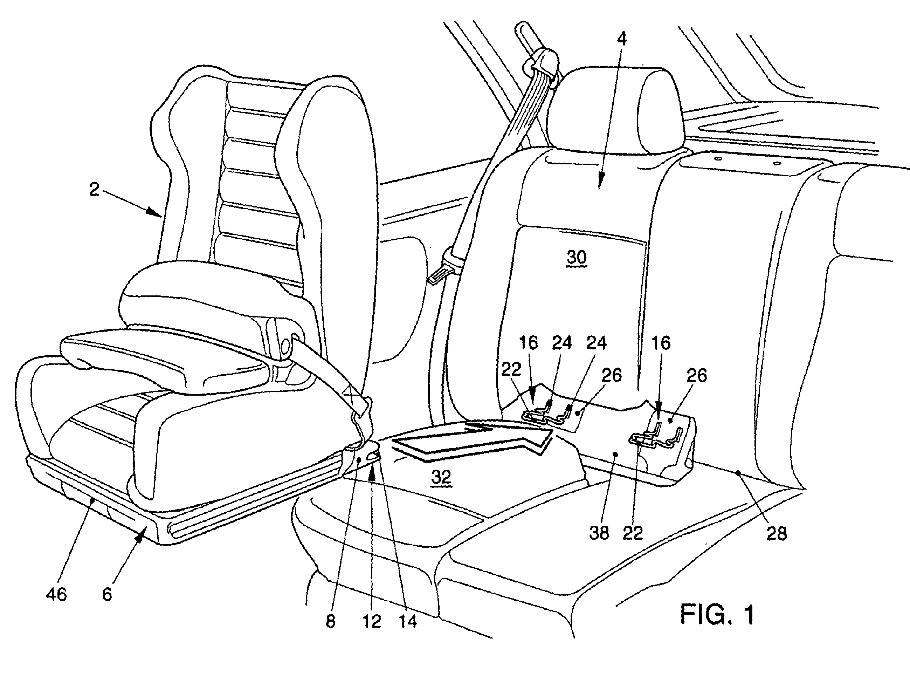

Die Hakenfallen 12 weisen jeweils eine im freien Ende des Rastarms 8 ausgebildete, nach hinten offene Aussparung 36 auf, in der die Rastnase 14 um eine an ihrem hinteren Ende angeordnete Schwenkachse drehbar gelagert ist. Die Rastnase 14 wird durch eine im Inneren des hohlen Rastarms 8 angeordnete Feder (nicht dargestellt) in die in Fig. 1 und 2 dargestellte Halteposition gedrückt, in der zwischen der Rastnase 14 und dem in Fahrtrichtung weisenden verjüngten Ende der Aussparung 36 eine Aufnahmeöffnung 40 für das Joch 22 des Bügels 16 gebildet wird.

Die Rastnase 14 ist auf ihrer Unterseite mit einer Auflaufschräge 44 für das Joch 22 des Bügels 16 versehen, die in der Nähe der Schwenkachse beginnt und sich schräg nach vome und unten erstreckt, so daß die Rastnase 14 entgegen der Kraft der Feder nach oben verschwenkt wird, wenn beim Einbau des auf dem Sitzteil 32 abgestellten Kindersitzes 2 die beiden Rastarme 8 mit Hilfe des Bedienungsgriffs 10 nach hinten ausgefahren werden, bis ihr freies hinteres Ende in den Spalt 28 zwischen der Rückenlehne 30 und dem Sitzteil 32 der Rücksitzbank 4 eintritt und die Joche 22 der beiden Bügel 16 von hinten in die Aussparungen 36 eindringen. Nach dem Vorbeitritt der Joche 22 an den Rastnasen 14 werden diese durch die Kraft der Federn wieder nach unten in die Halteposition gedrückt, wobei die Hakenfallen 12 und die Bügel 16 hörbar und fühlbar in Rasteingriff treten.

An der Vorderseite des Kindersitzes 2 befindet sich ein weiterer Bedienungsgriff 46 (Fig. 1), der über zwei Zugseile (nicht dargestellt) derart mit den Rastnasen 14 der beiden Hakenfallen 12 verbunden ist, daß sich diese durch Zug am Bedienungsgriff 46 aus der Halteposition nach oben schwenken lassen, um die Joche 22 der beiden Bügel 16 zum Ausbau des Kindersitzes 2 freizugeben.

Infolge der Nachgiebigkeit bzw. Verformbarkeit der beiden Bügelschenkel 20 bei Überschreiten einer vorgegebenen, in Fahrtrichtung wirkenden Zugkraft auf das jeweilige Joch 22 kann sich der Kindersitz 2 auf dem Sitzteil 32 etwas nach vome bewegen, wenn beispielsweise bei einem Frontalaufprall des Personenkraftwagens ungesichertes Ladegut auf die Rückseite der Rückenlehne 30 prallt und diese verformt oder etwas nach vome drückt. Durch die verzögerte Relativbewegung des Kindersitzes 2 in Bezug zum Sitzteil 32 wird die Krafteinwirkung der Rückenlehne 30 auf die Rückenlehne des Kindersitzes 2 über einen längeren Zeitraum gestreckt, so daß es nicht zu einem Auftreten von Spitzenkräften kommt, die zu einer Zerstörung oder zu einem gewaltsamen Öffnen der Hakenfallen 12 führen können.

## Patentansprüche

1. Rückhaltesystem für einen in einem Kraftfahrzeug mitgeführten, auf einem Sitz (4) des Kraftfahrzeugs abgestellten Kindersitz (2), bei dem der Kindersitz (2) starr mit dem Sitz (4) verbindbar ist und mindestens eine integrierte Rasteinrichtung (12) aufweist, die beim Befestigen des abgestellten Kindersitzes (2) mit mindestens einer am Sitz (4) oder in dessen Nähe an einem Karosserieteil des Fahrzeugs angebrachten sitz- oder fahrzeugfesten Befestigungseinrichtung (18) in Eingriff tritt, **gekennzeichnet durch** mindestens ein zwischen der integrierten Rasteinrichtung (12) des Kindersitzes (2) einerseits und dem Sitz (4) oder dem Karosserieteil andererseits angeordnetes, in die integrierte Rasteinrichtung (12) eingreifendes Deformationselement (20) der Befestigungseinrichtung (18), wobei sich das Deformationselement (20) bei Überschreiten einer vorgegebenen Kraft plastisch verformt und **dadurch** eine begrenzte Vorwärtsbewegung des Kindersitzes (2) gegenüber einem Sitzteil (32) des Sitzes (4) ermöglicht, um eine Spitzenbeanspruchung der Rast- und/oder Befestigungseinrichtung (12, 18) zu verringern.

2. Rückhaltesystem für einen in einem Kraftfahrzeug mitgeführten, auf einem Sitz (4) des Kraftfahrzeugs abgestellten Kindersitz (2), bei dem der Kindersitz (2) starr mit dem Sitz (4) verbindbar ist und mindestens eine Befestigungseinrichtung aufweist, die beim Befestigen des abgestellten Kindersitzes (2) mit mindestens einer am Sitz (4) oder in dessen Nähe an einem Karosserieteil des Fahrzeugs angebrachten sitz- oder fahrzeugfesten Rasteinrichtung in Eingriff tritt, **dadurch gekennzeichnet, dass** die Befestigungseinrichtung (18) des Kindersitzes (2) mindestens ein in die Rasteinrichtung eingreifendes Deformationselement aufweist, wobei sich das Deformationselement bei Überschreiten einer vorgegebenen Kraft plastisch verformt und **dadurch** eine begrenzte Vorwärtsbewegung des Kindersitzes (2) gegenüber einem Sitzteil (32) des Sitzes (4) ermöglicht, um eine Spitzenbeanspruchung der Rast- und/oder Befestigungseinrichtung zu verringern.

3. Rückhaltesystem nach Anspruch 1 oder 2, **dadurch gekennzeichnet, dass** das Deformationselement (20) einen Teil eines starren Rastelements (16) einer passiven Befestigungseinrichtung (18) bildet.

4. Rückhaltesystem nach Anspruch 3, **dadurch gekennzeichnet, dass** das Deformationselement (20) einstückig mit dem Rastelement (16) ausgebildet ist.

5. Rückhaltesystem nach Anspruch 4, **dadurch gekennzeichnet, dass** mindestens ein Teil des Rastelements (16) gegenüber der Fahrtrichtung abgebogen oder abgeknickt ist und sich bei Überschreitung der vorgegebenen Kraft in Fahrtrichtung biegt.

6. Rückhaltesystem nach einem der Ansprüche 3 bis 5, **dadurch gekennzeichnet, dass** ein Teil (20) des Rastelements (16) eine wellen- oder zickzackförmige Gestalt aufweist und sich bei Überschreitung der vorgegebenen Kraft unter Begradigung streckt.

7. Rückhaltesystem nach einem der Ansprüche 3 bis 6, **dadurch gekennzeichnet, dass** das Rastelement (16) aus einem starren Bügel besteht, der zwei wellen- oder zickzackförmig gebogene Schenkel (20) aufweist, die durch ein im Wesentlichen quer zur Fahrtrichtung verlaufendes Joch (22) verbunden sind, das zum Verrasten eines beweglichen Rastelements (14) der aktiven Rasteinrichtung (12) dient.

8. Rückhaltesystem nach Anspruch 7, **dadurch gekennzeichnet, dass** die vom Joch (22) abgewandten freien Enden der Schenkel (20) mit einer Halterung verschweißt sind.

9. Rückhaltesystem nach Anspruch 8, **dadurch gekennzeichnet, dass** die Halterung vom Karosserieteil, von einer auf dem Karosserieteil vormontierbaren Trägerplatte (26), von einem Teil eines Gestells des Sitzes (4) oder des Kindersitzes (2) von einer auf dem Gestell vormontierbaren Trägerplatte gebildet wird.

10. Rückhaltesystem nach Anspruch 1, **dadurch gekennzeichnet, dass** das Deformationselement (20) in eine aktive integrierte Rasteinrichtung (12) am Kindersitz (2) eingreift.

11. Rückhaltesystem nach Anspruch 2, **dadurch gekennzeichnet, dass** das Deformationselement (20) in eine aktive integrierte Rasteinrichtung (12), die am Sitz (4) oder dem Karosserieteil angeordnet ist, eingreift.

12. Rückhaltesystem nach Anspruch 10 oder 11, **dadurch gekennzeichnet, dass** die aktive Rasteinrichtung (12) von einer Hakenfalle, einer Schnellkupplung oder einem Schlossteil eines Gurtschlosses gebildet wird.

13. Rückhaltesystem nach einem der Ansprüche 1 oder 2, **dadurch gekennzeichnet, dass** das Deformationselement (20) mindestens einen Schlitz aufweist, in den ein Aufweitkörper eingreift, dessen Abmessungen in Richtung einer Breite des Schlitzes größer als die letztere sind, und dass sich der Aufweitkörper bei Überschreiten der vorgegebenen Kraft unter plastischer Aufweitung des Schlitzes innerhalb desselben verschiebt.

14. Rückhaltesystem nach Anspruch 13, **dadurch gekennzeichnet, dass** sich der Schlitz im Wesentlichen in Fahrtrichtung erstreckt.

15. Kraftfahrzeug mit mindestens einem Sitz (4) und mindestens einer am Sitz (4) oder in dessen Nähe an einem Karosserieteil des Fahrzeugs angebrachten sitz- oder fahrzeugfesten Befestigungseinrichtung (18) für einen auf dem Sitz (4) abgestellten, starr mit dem Sitz (4) verbindbaren Kindersitz (2), die mit einer in den Kindersitz (2) integrierten Rasteinrichtung (12) in Eingriff tritt, **dadurch gekennzeichnet, dass** die Befestigungseinrichtung (18) mindestens ein in die integrierte Rasteinrichtung eingreifendes Deformationselement (20) umfasst, das sich bei Überschreiten einer vorgegebenen Kraft plastisch verformt und **dadurch** eine begrenzte Vorwärtsbewegung des Kindersitzes (2) gegenüber einem Sitzteil (32) des Sitzes (4) ermöglicht, um eine Spitzenbeanspruchung der Rast- und/oder Befestigungseinrichtung (12, 18) zu verringern.

16. Kraftfahrzeug mit mindestens einem Sitz (4) und mindestens einer am Sitz (4) oder in dessen Nähe an einem Karosserieteil des Fahrzeugs angebrachten sitz- oder fahrzeugfesten Rasteinrichtung für einen auf dem Sitz (4) abgestellten, starr mit dem Sitz (4) verbindbaren Kindersitz (2), die mit einer an dem Kindersitz (2) angeordneten Befestigungseinrichtung in Eingriff tritt, **dadurch gekennzeichnet, dass** die Befestigungseinrichtung mindestens ein in die Rasteinrichtung eingreifendes Deformationselement (20) umfasst, das sich bei Überschreiten einer vorgegebenen Kraft plastisch verformt und **dadurch** eine begrenzte Vorwärtsbewegung des Kindersitzes (2) gegenüber einem Sitzteil (32) des Sitzes (4) ermöglicht, um eine Spitzenbeanspruchung der Rast- und/oder Befestigungseinrichtung (12, 18) zu verringern.

17. Kraftfahrzeug nach Anspruch 15 oder 16, **dadurch gekennzeichnet, dass** zwei Befestigungseinrichtungen (18) quer zur Fahrtrichtung im Abstand voneinander angeordnet sind.

18. Kraftfahrzeug nach Anspruch 15 oder 16, **dadurch gekennzeichnet, dass** die integrierte Rasteinrichtung (12) oder die Befestigungseinrichtung (18) von der Vorderseite des Sitzes (4) her durch einen Spalt zwischen seiner Rückenlehne (30) und seinem Sitzteil (32) für die Befestigungseinrichtung (18) oder integrierte Rasteinrichtung (12) zugänglich ist.

19. Kraftfahrzeug nach Anspruch 15 oder 16, **dadurch gekennzeichnet, dass** die integrierte Rasteinrichtung (12) oder die Befestigungseinrichtung (18) auf beiden Seiten einer Rückenlehne (30) des Sitzes (4) angeordnet ist.

20. Kraftfahrzeug nach einem der Ansprüche 15 und 17 bis 19, **gekennzeichnet durch** eines oder mehrere der im Kennzeichenteil der Ansprüche 1, 3 bis 10 und 12 bis 14 aufgeführten Merkmale.

21. Kraftfahrzeug nach einem der Ansprüche 16 bis 19, **gekennzeichnet durch** eines oder mehrere der im Kennzeichenteil der Ansprüche 2 bis 9 und 11 bis 14 aufgeführten Merkmale.

22. Kindersitz für ein Kraftfahrzeug, mit mindestens einer Kindersitzseitigen Befestigungseinrichtung zum Verrasten des auf einem Sitz (4) des Kraftfahrzeugs abgestellten Kindersitzes (2) mit einer am Sitz (4) oder in dessen Nähe an einem Teil der Karosserie des Kraftfahrzeugs angebrachten sitz- oder fahrzeugfesten Rasteinrichtung unter Herstellung einer starren Verbindung zwischen dem Sitz (4) und dem Kindersitz (2), **dadurch gekennzeichnet, dass** die Befestigungseinrichtung ein in die Rasteinrichtung eingreifendes Deformationselement (20) aufweist, das sich bei Überschreiten einer vorgegebenen Kraft plastisch verformt und **dadurch** eine begrenzte Vorwärtsbewegung des Kindersitzes (2) gegenüber einem Sitzteil (32) des Sitzes (4) ermöglicht, um eine Spitzenbeanspruchung der Rast- und/oder Befestigungseinrichtung zu verringern.

23. Kindersitz nach Anspruch 22, **gekennzeichnet durch** eines oder mehrere der im kennzeichnenden Teil der Ansprüche 3 bis 9 und 11 bis 14 aufgeführten Merkmale.

## Revendications

1. Système de retenue pour un siège d'enfant (2) emporté dans un véhicule automobile, posé sur un siège (4) du véhicule automobile, le siège d'enfant (2) pouvant être connecté rigidement au siège (4) et présentant au moins un dispositif d'encliquetage intégré (12), qui s'engage lors de la fixation du siège d'enfant (2) avec au moins un dispositif de fixation (18) fixé au siège ou au véhicule et monté sur le siège (4) ou à proximité de celui-ci sur une partie de la carrosserie du véhicule, **caractérisé par** au moins un élément de déformation (20) du dispositif de fixation (18) disposé entre le dispositif d'encliquetage intégré (12) du siège d'enfant (2) d'une part et le siège (4) ou la partie de la carrosserie d'autre part, et venant en prise dans le dispositif d'encliquetage intégré (12), l'élément de déformation (20) se déformant plastiquement en cas de dépassement d'une force prédéfinie et permettant de ce fait un mouvement limité du siège d'enfant (2) vers l'avant par rapport à une partie de siège (32) du siège (4), afin de réduire une sollicitation extrême du dispositif d'encliquetage et/ou de fixation (12, 18).

2. Système de retenue pour un siège d'enfant (2) emporté dans un véhicule automobile, posé sur un siège (4) du véhicule automobile, le siège d'enfant (2) pouvant être connecté rigidement au siège (4) et présentant au moins un dispositif de fixation, qui s'engage lors de la fixation du siège d'enfant (2) avec au moins un dispositif d'encliquetage fixé au siège ou au véhicule et monté sur le siège (4) ou à proximité de celui-ci sur une partie de la carrosserie du véhicule, **caractérisé en ce que** le dispositif de fixation (18) du siège d'enfant (2) présente au moins un élément de déformation venant en prise dans le dispositif d'encliquetage, l'élément de déformation se déformant plastiquement en cas de dépassement d'une force prédéfinie et permettant de ce fait un mouvement limité du siège d'enfant (2) vers l'avant par rapport à une partie de siège (32) du siège (4), afin de réduire une sollicitation extrême du dispositif d'encliquetage et/ou de fixation.

3. Système de retenue selon la revendication 1 ou 2, **caractérisé en ce que** l'élément de déformation (20) forme une partie d'un élément d'encliquetage rigide (16) d'un dispositif de fixation passif (18) .

4. Système de retenue selon la revendication 3, **caractérisé en ce que** l'élément de déformation (20) est réalisé d'une seule pièce avec l'élément d'encliquetage (16).

5. Système de retenue selon la revendication 4, **caractérisé en ce qu'**au moins une partie de l'élément d'encliquetage (16) est courbée ou fléchie par rapport à la direction d'avance et fléchit dans la direction d'avance en cas de dépassement de la force prédéfinie.

6. Système de retenue selon l'une quelconque des revendications 3 à 5, **caractérisé en ce qu'**une partie (20) de l'élément d'encliquetage (16) présente une forme ondulée ou en zigzag et s'étend en se redressant en cas de dépassement de la force prédéfinie.

7. Système de retenue selon l'une quelconque des revendications 3 à 6, **caractérisé en ce que** l'élément d'encliquetage (16) se compose d'un étrier rigide qui présente deux branches (20) courbées suivant une forme ondulée ou en zigzag, qui sont connectées par une culasse (22) s'étendant essentiellement transversalement à la direction d'avance, qui sert à l'encliquetage d'un élément d'encliquetage mobile (14) du dispositif d'encliquetage actif (12).

8. Système de retenue selon la revendication 7, **caractérisé en ce que** les extrémités libres des branches (20) opposées à la culasse (22) sont soudées à une fixation.

9. Système de retenue selon la revendication 8, **caractérisé en ce que** la fixation est formée par la partie de la carrosserie, par une plaque de support (26) pouvant être prémontée sur la partie de la carrosserie, par une partie d'une structure du siège (4) ou du siège d'enfant (2) ou par une plaque de support pouvant être prémontée sur la structure.

10. Système de retenue selon la revendication 1, **caractérisé en ce que** l'élément de déformation (20) vient en prise sur le siège d'enfant (2) dans un dispositif d'encliquetage intégré actif (12).

11. Système de retenue selon la revendication 2, **caractérisé en ce que** l'élément de déformation (20) vient en prise dans un dispositif d'encliquetage intégré actif (12) qui est disposé sur le siège (4) ou sur la partie de la carrosserie.

12. Système de retenue selon la revendication 10 ou 11, **caractérisé en ce que** le dispositif d'encliquetage actif (12) est formé par un pêne à crochet, un raccord rapide ou une partie de serrure d'une boucle de ceinture.

13. Système de retenue selon l'une quelconque des revendications 1 ou 2, **caractérisé en ce que** l'élément de déformation (20) présente au moins une fente dans laquelle un corps d'élargissement vient en prise, dont les dimensions dans la direction d'une largeur de la fente sont supérieure à cette dernière et **en ce que** le corps d'élargissement, en cas de dépassement de la force prédéfinie, se déplace par élargissement plastique de la fente à l'intérieur de celle-ci.

14. Système de retenue selon la revendication 13, **caractérisé en ce que** la fente s'étend essentiellement dans la direction d'avance.

15. Véhicule automobile comprenant au moins un siège (4) et au moins un dispositif de fixation (18) fixé au siège ou au véhicule et monté sur le siège (4) ou à proximité de celui-ci sur une pièce de la carrosserie du véhicule, pour un siège d'enfant (2) posé sur le siège (4) et pouvant être connecté rigidement au siège (4), qui vient en prise avec un dispositif d'encliquetage (12) intégré dans le siège d'enfant (2), **caractérisé en ce que** le dispositif de fixation (18) comprend au moins un élément de déformation (20) venant en prise dans le dispositif d'encliquetage intégré et qui se déforme plastiquement en cas de dépassement d'une force prédéfinie et permet de ce fait un mouvement limité du siège d'enfant (2) vers l'avant par rapport à une partie de siège (32) du siège (4), afin de réduire une sollicitation extrême du dispositif d'encliquetage et/ou de fixation (12, 18).

16. Véhicule automobile comprenant au moins un siège (4) et au moins un dispositif d'encliquetage fixé au siège ou au véhicule et monté sur le siège (4) ou à proximité de celui-ci sur une pièce de la carrosserie du véhicule, pour un siège d'enfant (2) posé sur le siège (4) et pouvant être connecté rigidement au siège (4), qui vient en prise avec un dispositif de fixation disposé sur le siège d'enfant (2), **caractérisé en ce que** le dispositif de fixation comprend au moins un élément de déformation (20) venant en prise dans le dispositif d'encliquetage et qui se déforme plastiquement en cas de dépassement d'une force prédéfinie et permet de ce fait un mouvement limité du siège d'enfant (2) vers l'avant par rapport à une partie de siège (32) du siège (4), afin de réduire une sollicitation extrême du dispositif d'encliquetage et/ou de fixation (12, 18) .

17. Véhicule automobile selon la revendication 15 ou 16, **caractérisé en ce que** deux dispositifs de fixation (18) sont disposés transversalement à la direction d'avance à distance l'un de l'autre.

18. Véhicule automobile selon la revendication 15 ou 16, **caractérisé en ce que** le dispositif d'encliquetage intégré (12) ou le dispositif de fixation (18) est accessible depuis le côté avant du siège (4) par une fente entre son dossier (30) et sa partie de siège (32) pour le dispositif de fixation (18) ou le dispositif d'encliquetage intégré (12).

19. Véhicule automobile selon la revendication 15 ou 16, **caractérisé en ce que** le dispositif d'encliquetage intégré (12) ou le dispositif de fixation (18) est disposé des deux côtés d'un dossier (30) du siège (4) .

20. Véhicule automobile selon l'une quelconque des revendications 15 et 17 à 19, **caractérisé par** une ou plusieurs des caractéristiques citées dans la partie caractérisante des revendications 1, 3 à 10 et 12 à 14.

21. Véhicule automobile selon l'une quelconque des revendications 16 à 19, **caractérisé par** une ou plusieurs des caractéristiques citées dans la partie caractérisante des revendications 2 à 9 et 11 à 14.

22. Siège d'enfant pour un véhicule automobile, comprenant au moins un dispositif de fixation du côté du siège d'enfant, pour l'encliquetage du siège d'enfant (2) posé sur un siège (4) du véhicule automobile, avec un dispositif d'encliquetage fixé au siège ou au véhicule et monté sur le siège (4) ou à proximité de celui-ci sur une partie de la carrosserie du véhicule automobile, créant une connexion rigide entre le siège (4) et le siège d'enfant (2), **caractérisé en ce que** le dispositif de fixation présente un élément de déformation (20) venant en prise dans le dispositif d'encliquetage, se déformant plastiquement en cas de dépassement d'une force prédéfinie et permettant de ce fait un mouvement limité du siège d'enfant (2) vers l'avant par rapport à une partie de siège (32) du siège (4), afin de réduire une sollicitation extrême du dispositif d'encliquetage et/ou de fixation.

23. Siège d'enfant selon la revendication 22, **caractérisé par** une ou plusieurs des caractéristiques citées dans la partie caractérisante des revendications 2 à 9 et 11 à 14.

## Claims

1. Restraint system for a child seat (2) which is carried in a motor vehicle and is set down on a seat (4) of the motor vehicle, in which the child seat (2) can be connected rigidly to the seat (4) and has at least one integrated latching device (12) which, during the fastening of the set-down child seat (2), enters into engagement with at least one fastening device (18) which is fixed on the seat or vehicle and is attached to the seat (4) or in the vicinity thereof to a body part of the vehicle, **characterized by** at least one deformation element (20) of the fastening device (18), which deformation element is arranged between the integrated latching device (12) of the child seat (2), on the one hand, and the seat (4) or the body part, on the other hand, and engages in the integrated latching device (12), the deformation element (20) deforming plastically when a predetermined force is exceeded and, as a result, permitting a limited forwards movement of the child seat (2) in relation to a seat part (32) of the seat (4) in order to reduce a peak loading of the latching and/or fastening device (12, 18).

2. Restraint system for a child seat (2) which is carried in a motor vehicle and is set down on a seat (4) of the motor vehicle, in which the child seat (2) can be connected rigidly to the seat (4) and has at least one fastening device which, during the fastening of the set-down child seat (2), enters into engagement with at least one latching device which is fixed on the seat or vehicle and is attached to the seat (4) or in the vicinity thereof to a body part of the vehicle, **characterized in that** the fastening device (18) of the child seat (2) has at least one deformation element which engages in the latching device, the deformation element plastically deforming when a predetermined force is exceeded and, as a result, permitting a limited forwards movement of the child seat (2) in relation to a seat part (32) of the seat (4) in order to reduce a peak loading of the latching and/or fastening device.

3. Restraint system according to Claim 1 or 2, **characterized in that** the deformation element (20) forms part of a rigid latching element (16) of a passive fastening device (18).

4. Restraint system according to Claim 3, **characterized in that** the deformation element (20) is formed integrally with the latching element (16).

5. Restraint system according to Claim 4, **characterized in that** at least one part of the latching element (16) is turned or bent away in relation to the direction of travel and bends in the direction of travel when the predetermined force is exceeded.

6. Restraint system according to one of Claims 3 to 5, **characterized in that** one part (20) of the latching element (16) has a wavy or zigzag-shaped design and stretches with straightening taking place when a predetermined force is exceeded.

7. Restraint system according to one of Claims 3 to 6, **characterized in that** the latching element (16) comprises a rigid bow which has two limbs (20) which are bent in a wavy or zigzag-shaped manner and are connected by a yoke (22) which essentially runs transversely to the direction of travel and serves for the latching of a movable latching element (14) of the active latching device (12).

8. Restraint system according to Claim 7, **characterized in that** those free ends of the limbs (20) which face away from the yoke (22) are welded to a securing device.

9. Restraint system according to Claim 8, **characterized in that** the securing device is formed by the body part, by a support plate (26) preassemblable on the body part, by part of a frame of the seat (4) or of the child seat (2) or by a support plate preassemblable on the frame.

10. Restraint system according to Claim 1, **characterized in that** the deformation element (20) engages in an active, integrated latching device (12) on the child seat (2).

11. Restraint system according to Claim 2, **characterized in that** the deformation element (20) engages in an active, integrated latching device (12) which is arranged on the seat (4) or the body part.

12. Restraint system according to Claim 10 or 11, **characterized in that** the active latching device (12) is formed by a hook latch, a rapid-action coupling or a buckle part of a seat belt buckle.

13. Restraint system according to either of Claims 1 and 2, **characterized in that** the deformation element (20) has at least one slot in which an extension body engages, the dimensions of which are greater in the direction of a width of the slot than the said width, and **in that** the expansion body is displaced within the slot, plastically expanding the latter, when the predetermined force is exceeded.

14. Restraint system according to Claim 13, **characterized in that** the slot extends essentially in the direction of travel.

15. Motor vehicle with at least one seat (4) and at least one fastening device (18), which is fixed on the seat or vehicle and is attached to the seat (4) or in the vicinity thereof to a body part of the vehicle and is intended for a child seat (2) which is set down on the seat (4), can be connected rigidly to the seat (4) and enters into engagement with a latching device (12) which is integrated in the child seat (2), **characterized in that** the fastening device (18) comprises at least one deformation element (20) which engages in the integrated latching device and plastically deforms when a predetermined force is exceeded and, as a result, permits a limited forwards movement of the child seat (2) in relation to a seat part (32) of the seat (4) in order to reduce a peak loading of the latching and/or fastening device (12, 18).

16. Motor vehicle with at least one seat (4) and at least one latching device, which is fixed on the seat or vehicle and is attached to the seat (4) or in the vicinity thereof to a body part of the vehicle and is intended for a child seat (2) which is set down on the seat (4), can be connected rigidly to the seat (4) and enters into engagement with a fastening device arranged on the child seat (2), **characterized in that that** fastening device comprises at least one deformation element (20) which engages in the latching device and plastically deforms when a predetermined force is exceeded and, as a result, permits a limited forwards movement of the child seat (2) in relation to a seat part (32) of the seat (4) in order to reduce a peak loading of the latching and/or fastening device (12, 18).

17. Motor vehicle according to Claim 15 or 16, **characterized in that** two fastening devices (18) are arranged at a distance from each other transversely to the direction of travel.

18. Motor vehicle according to Claim 15 or 16, **characterized in that** the integrated latching device (12) or the fastening device (18) is accessible from the front side of the seat (4) through a gap between its backrest (30) and its seat part (32) for the fastening device (18) or integrated latching device (12).

19. Motor vehicle according to Claim 15 or 16, **characterized in that** the integrated latching device (12) or the fastening device (18) is arranged on both sides of a backrest (30) of the seat (4).

20. Motor vehicle according to one of Claims 15 and 17 to 19, **characterized by** one or more features cited in the characterizing part of Claims 1, 3 to 10 and 12 to 14.

21. Motor vehicle according to one of Claims 16 to 19, **characterized by** one or more of the features cited in the characterizing part of Claims 2 to 9 and 11 to 14.

22. Child seat for a motor vehicle, with at least one fastening device on the child-seat side for the latching of the child seat (2), which is set down on a seat (4) of the motor vehicle, to a latching device which is fixed on the seat or vehicle and is attached to the seat (4) or in the vicinity thereof to a part of the body of the motor vehicle, with a rigid connection being produced between the seat (4) and the child seat (2), **characterized in that** the fastening device has a deformation element (20) which engages in the latching device and plastically deforms when a predetermined force is exceeded and, as a result, permits a limited forwards movement of the child seat (2) in relation to a seat part (32) of the seat (4) in order to reduce a peak loading of the latching and/or fastening device.

23. Child seat according to Claim 22, **characterized by** one or more of the features cited in the characterizing part of Claims 3 to 9 and 11 to 14.
